# EUROPÄISCHE PATENTSCHRIFT

(11) **EP 2 766 855 B1**
(45) Veröffentlichungstag und Bekanntmachung des Hinweises auf die Patenterteilung: **10.08.2016**
(21) Anmeldenummer: 12781036.4
(22) Anmeldetag: 10.10.2012
(51) Int. Cl.: G06K 19/077, G06K 19/073

(54) **CHIPMODUL UND DATENTRÄGERKÖRPER**
A CHIP MODULE AND A DATA CARRIER BODY
MODULE À PUCE ET CORPS DE SUPPORT DE DONNÉES

(30) Priorität: 11.10.2011 DE 102011115598
(43) Veröffentlichungstag der Anmeldung: 20.08.2014
(73) Patentinhaber: Giesecke & Devrient GmbH, 81677 München (DE)
(72) Erfinder: GRIESMEIER, Robert, 83052 Bruckmühl (DE); TARANTINO, Thomas, 83410 Laufen (DE); OLBRICH, Magnus, 81543 München (DE)
(86) Internationale Anmeldenummer: PCT/EP2012/004247
(87) Internationale Veröffentlichungsnummer: WO 2013/053470

(56) Entgegenhaltungen:
- WO-A1-98/15916
- US-A1- 2008 217 413
- US-A1- 2009 289 774

## Beschreibung

Die vorliegende Erfindung betrifft ein Chipmodul, einen Datenträgerkörper zum Bilden eines portablen Datenträgers durch Aufnehmen eines Chipmoduls sowie einen entsprechenden portablen Datenträger.

Ein Chipmodul umfasst in bekannter Weise ein Trägerband, auf dem auf der Rückseite ein integrierter Schaltkreis angeordnet ist. Auf der Vorderseite befinden sich Kontaktflächen zur kontaktbehafteten Datenkommunikation mit dem Schaltkreis und zu dessen Energieversorgung. Diese Kontaktflächen sind mit dem Schaltkreis beispielsweise über Bond-Drähte verbunden. Das - Chipmodul umfasst weiterhin eine auf dem Trägerband angeordnete, mit dem Schaltkreis verbundene Spule, welche als Antenne zur kontaktlosen Datenkommunikation mit dem Schaltkreis dient, sowie zu dessen Energieversorgung im Kontaktlosmodus.

Es besteht für einen Nutzer eines Datenträgers mit einem solchen Chipmodul die Gefahr, dass Daten aus dem integrierten Schaltkreis über die Spulenantenne unbemerkt ausgelesen werden können. Dazu ist es lediglich notwendig, dass ein Angreifer mit einem geeigneten Lesegerät nahe genug an den Datenträger herankommt, so dass das Chipmodul in den Ansprechbereich des Lesegeräts gelangt. Ein solcher Angriff kann dadurch abgewendet werden, dass der Nutzer jede Datenkommunikation zwischen dem Schaltkreis auf dem Chipmodul und einem Lesegerät in geeigneter Weise autorisieren muss, beispielsweise durch Betätigen eines Schalterelements auf dem Datenträger. Nachteilig hieran ist jedoch, dass derartige Schalter mechanisch aufwendig sind und sie dadurch die Herstellung des Datenträgers verteuern.

Aufgabe der vorliegenden Erfindung ist es demnach, einen Datenträger zur kontaktlosen Datenkommunikation bereitzustellen, welcher kostengünstig hergestellt werden kann, wobei gleichzeitig ein unbefugtes Auslesen des Datenträgers auf kontaktlosem Weg einfach und zuverlässig verhindert werden kann.

WO 98/15916 offenbart ein Chipmodul mit den Merkmalen des Oberbegriffs des Anspruchs 1.

Diese Aufgabe wird durch ein Chipmodul, einen Datenträgerkörper sowie einen Datenträger mit den Merkmalen der unabhängigen Ansprüche gelöst. Vorteilhafte Ausgestaltungen und Weiterbildungen sind in den abhängigen Ansprüchen angegeben.

Ein erfindungsgemäßes Chipmodul zum Anordnen in einem erfindungsgemäßen Datenträgerkörper umfasst ein Trägerband, einen auf dem Trägerband angeordneten integrierten Schaltkreis, mit dem integrierten Schaltkreis verbundene Kontaktflächen zur kontaktbehafteten Datenkommunikation sowie eine auf dem Trägerband angeordnete und mit dem integrierten Schaltkreis verbundene Spule zur kontaktlosen Datenkommunikation. Das Chipmodul zeichnet sich dadurch aus, dass die Spule an einer Unterbrechung der Spule Spulenkontakte ausbildet, welche auf dem Trägerband einen ersten Teil eines Schalterelements bilden. Mittels dieses Schalterelements können die Spulenkontakte verbunden werden, wenn das Chipmodul in dem Datenträgerkörper angeordnet ist.

Ein erfindungsgemäßer Datenträgerkörper zum Bilden eines erfindungsgemäßen portablen Datenträgers durch Aufnehmen eines erfindungsgemäßen Chipmoduls umfasst ein den zweiten Teil des Schalterelements bildendes elektrisch leitfähiges Element. Dieses Element ist dabei derart in dem Datenträgerkörper angeordnet, dass es bei bestimmungsgemäßer Anordnung des Chipmoduls in dem Datenträgerkörper mit dem ersten Teil des Schalterelements derart zusammenwirkt, dass die Spulenkontakte der Spule durch das elektrisch leitfähige Element verbunden werden können.

Ein erfindungsgemäßer portabler Datenträger schließlich umfasst einen erfindungsgemäßen Datenträgerkörper und ein darin wie beschrieben angeordnetes, erfindungsgemäßes Chipmodul. Der Datenträger ist vorzugsweise als Chipkarte ausgebildet.

Chipmodul und Datenträgerkörper sind, wie nachstehend noch detailliert beschrieben, im Wesentlichen mit bekannten Verfahren herstellbar. Das Schalterelement, dessen erster Teil auf dem Trägerband angeordnet ist und dessen zweiter Teil sich in dem Datenträgerkörper befindet, kann in technisch einfacher Weise gebildet werden. Auf dem Trägerband bedarf es lediglich einer Unterbrechung der Spule, wodurch an den Spulenenden der unterbrochenen Spule Spulenkontakte gebildet werden, welche den ersten Teil des Schalterelements bilden. In dem Datenträgerkörper muss lediglich das elektrisch leitfähige Element geeignet vorgesehen und angeordnet werden, damit es beim Betätigen des Schalterelements, wie nachstehend beschrieben, die Spulenkontakte verbinden kann.

Zum Bereitstellen des Schalterelements ist somit kein mechanisch und/ oder elektronisch aufwendiger Aufbau erforderlich. Die Anordnung des Chipmoduls in dem Datenträgerkörper zum Bilden des Datenträgers kann in bekannter Weise erfolgen. Die Tatsache, dass das erfindungsgemäße Schalterelement zusätzlich bereitgestellt wird, beeinträchtigt den Herstellungsprozess des Datenträgers, insbesondere das Einbetten des Chipmoduls in den Datenträgerkörper, im Wesentlichen nicht.

Durch Betätigen des Schalterelements wird die Spule, wie erwähnt, temporär geschlossen und eine kontaktlose Datenkommunikation mittels der Spule kann erfolgen. Solange das Schalterelement aber nicht betätigt wird, ist die Spule unterbrochen und eine kontaktlose Datenkommunikation, insbesondere ein unbefugtes Auslesen des integrierten Schaltkreises, kann nicht stattfinden. Die Bedienung des Schalterelements ist für einen Nutzer des Datenträgers einfach und zuverlässig durchführbar, wie nachfolgend detailliert beschrieben. Die Handhabung des Datenträgers wird dadurch nicht erschwert, die Sicherheit aber deutlich erhöht.

Insgesamt wird somit die Herstellung des Datenträgers nur unwesentlich verteuert, der auf diese Weise erzielbare Sicherheitsgewinn durch die geschaffene Möglichkeit, zuverlässig ein unbefugtes Auslesen des Schaltkreises zu verhindern, ist dagegen beträchtlich.

Wie erwähnt, sind die Spulenkontakte auf dem Chipmodul, d.h. auf dem Trägerband des Chipmoduls, derart angeordnet, dass sie mit einem in dem Datenträgerkörper ausgebildeten zweiten Teil des Schalterelements, dem genannten elektrisch leitfähigen Element, zusammenwirken, wenn das Chipmodul in dem Datenträgerkörper angeordnet ist.

Gemäß einer ersten bevorzugten Ausführungsform sind die Spulenkontakte auf der Rückseite des Trägerbandes benachbart zueinander angeordnet. In einer speziellen Ausgestaltung dieser Ausführungsform weist das Trägerband eine seitliche flächige Ausdehnung auf, auf deren Rückseite dann die Spulenkontakte ausgebildet sind.

Auf diese Weise wird ermöglicht, das Schalterelement in besonders einfacher Weise auszubilden. Die Spulenkontakte sind dabei auf der Rückseite des Trägerbandes derart angeordnet, dass, wenn das Chipmodul in dem Datenträgerkörper derart angeordnet ist, dass die Spulenkontakte über einer Kavität des Datenträgerkörpers angeordnet sind, in welcher das den zweiten Teil des Schalterelements bildende elektrisch leitfähige Element angeordnet ist, die Spulenkontakte durch Herunterdrücken des Trägerbandes im Bereich der Kavität verbunden werden können.

In dieser Ausführungsform umfasst der Datenträgerkörper demnach zumindest eine Kavität, in welcher das elektrisch leitfähige Element angeordnet ist. Die Anordnung des Elements ist dabei derart, dass die Spulenkontakte durch Herunterdrücken des Trägerbandes im Bereich der Kavität miteinander verbunden werden können, sofern das Chipmodul, dessen Spulenkontakte auf der Rückseite des Trägerbandes benachbart zueinander angeordnet sind, derart in dem Datenträgerkörper angeordnet ist, dass die Spulenkontakte über der Kavität zu liegen kommen. Das Betätigen des Schalterelements, hier das Herunterdrücken des Trägerbandes im Bereich der Kavität, bringt beide Spulenkontakte gleichzeitig in Kontakt mit dem elektrisch leitfähigen Element. Dadurch wird die Unterbrechung der Spule temporär, d.h. für die Dauer des Herunterdrückens, aufgehoben.

Dadurch, dass gemäß der Ausgestaltung der Ausführungsform die Spulenkontakte auf der Rückseite einer seitlichen Ausdehnung des Trägerbandes angeordnet sind, wird erreicht, dass die Kavität, über welcher die Spulenkontakte dann zu liegen kommen, leicht seitlich versetzt zu den Kontaktflächen des Datenträgers angeordnet sind. Beim Betätigen des Schalterelements muss daher nicht genau der Bereich des Datenträgers heruntergedrückt werden, an dem die Kontaktflächen angeordnet sind, sondern ein Bereich daneben, der lediglich durch Trägerband gebildet wird. Damit können die Kontaktflächen geschont und unnötige Verschmutzung derselben kann vermieden werden. Ferner wird auch eine unnötige mechanische Belastung vermieden.

Andererseits hat die Variante, in der die Spulenkontakte auf der Rückseite eines minimal bemessenen, d.h. nicht ausgedehnten Trägerbandes angeordnet sind, den Vorteil, dass Trägerbandmaterial - und damit Kosten - gespart werden können.

Gemäß einer zweiten bevorzugten Ausführungsform sind die Spulenkontakte an einem seitlichen Rand des Trägerbandes benachbart zueinander angeordnet.

Auch gemäß dieser Ausführungsform kann das Schalterelement in einfacher Weise gebildet werden. Die Spulenkontakte sind dabei an dem seitlichen Rand des Trägerbandes derart angeordnet, dass die Spulenkontakte durch Verbiegen des Datenträgerkörpers verbunden werden können. Hierzu ist an dem seitlichen Rand der Kavität des Datenträgerkörpers ein den zweiten Teil des Schalterelements bildendes elektrisch leitfähiges Element angeordnet, wobei die Spulenkontakte benachbart zu dem elektrisch leitfähigen Element liegen.

Entsprechend umfasst der Datenträgerkörper in dieser Ausführungsform zumindest eine Kavität, in welcher das elektrisch leitfähige Element zumindest teilweise an einem seitlichen Rand angeordnet ist. Die Anordnung ist dabei derart, dass die Spulenkontakte durch Verbiegen des Datenträgerkörpers verbunden werden können, sofern ein Chipmodul, dessen Spulenkontakte an dem seitlichen Rand des Trägerbandes benachbart zueinander angeordnet sind, derart in dem Datenträgerkörper angeordnet ist, dass die Spulenkontakte benachbart zu dem elektrisch leitfähigen Element angeordnet sind.

Mit Verbiegen des Datenträgerkörpers verschwindet der Spalt, der in unverbogenem Zustand den seitlichen Rand der Kavität und den Rand des Trägerbandes trennt. Dadurch kontaktieren beide Spulenkontakte gleichzeitig das elektrisch leitfähige Element und schließen den Spulenstromkreis. Der Stromkreis bleibt solange geschlossen, wie der Datenträgerkörper verbogen gehalten wird.

Generell, aber insbesondere in der ersten Ausführungsform, kann das elektrisch leitfähige Element aus einem elasto-resistiven Material gebildet sein, d.h. einem Material, welches seinen elektrischen Widerstand unter Einwirkung von Druck deutlich verringert. Es ist dann im Zusammenhang mit der ersten Ausführungsform beispielsweise möglich, dass die gesamte Kavität, über der die Spulenkontakte auf der Rückseite des Trägerbandes angeordnet sind, mit diesem Material ausgefüllt ist, so dass die Spulenkontakte dauerhaft in Kontakt mit diesem Material sind. Die elektrische Unterbrechung der Spule, welche durch den erheblichen elektrischen Widerstand des Materials in nicht komprimiertem Zustand gewährleistet wird, wird nur dann aufgehoben, wenn der elektrische Widerstand des Materials durch Herunterdrücken des Trägerbandes im Bereich der Kavität, d.h. durch Ausüben von Druck auf das Material, derart verringert wird, dass sich die erforderliche elektrische Leitfähigkeit einstellt.

Wird als elektrisch leitfähiges Material ein Material verwendet, welches auch leitfähig ist, ohne dass es Druck ausgesetzt ist, so wird dieses Material in der ersten Ausführungsform in der Kavität vorzugsweise lediglich am Boden vorgesehen. Wenn das Trägerbandes im Bereich der Kavität nicht heruntergedrückt ist, bildet sich ein isolierender Spalt zwischen den Spulenkontakten und dem elektrisch leitfähigen Material, der eine Unterbrechung der Spule gewährleistet.

Auch in der beschriebenen zweiten Ausführungsform kann das elastoresistive Material zum Bilden des zweiten Teils des Schalterelements zum Einsatz kommen. Im Gegensatz zu der beschriebenen Ausgestaltung, in der ein gewöhnliches, dauerhaft elektrisch leitfähiges Material verwendet wird, welches in unverbogenem Zustand von den Spulenkontakten am Rand des Trägerbandes durch einen Spalt beabstandet ist, wird hier der Spalt im Bereich der Spulenkontakte im Wesentlichen vollständig mit dem elasto-resistiven Material ausgefüllt. Die Spulenkontakte am Rand des Trägerbandes sind damit dauerhaft mit dem Material verbunden, allerdings ohne dass die elektrische Unterbrechung der Spule dauerhaft aufgehoben wird. Ein Verbiegen des Datenträgerkörpers führt bei dieser Ausgestaltung dazu, dass das Material komprimiert wird und sein elektrischer Widerstand herabgesetzt wird, wodurch die zuvor bestehende elektrische Unterbrechung der Spule temporär, d.h. für die Dauer der Verbiegung, aufgehoben wird.

Es ist möglich, dass zumindest ein Leiterbahnabschnitt einer die Spule bildenden Leiterbahn auf der Vorderseite des Trägerbandes verläuft. Dazu wird die die Spule bildende Leiterbahn, welche auf der Rückseite des Trägerbandes an dem integrierten Schaltkreis beginnt und endet, geeignet durch das Trägerband hindurch geführt, beispielweise über ein Via ("vertical interconnect access").

In dem Fall, in dem die Spule auf der Rückseite des Trägerbandes um den Chip herum geführt wird, entsteht das Problem, dass das Ende der die Spule bildenden Leiterbahn wieder zurück zum Schaltkreis geführt werden muss.

Dazu müssen diejenigen Spulenwindungen, welche zuvor ausgehend vom Schaltkreis nach außen hin gebildet worden sind, überbrückt werden. Dies kann zum einen auf der Rückseite des Trägerbandes geschehen, beispielsweise mittels eines Bond-Drahtes ("wire-bonding"), oder mittels einer isolierenden Brücke, die über die zu überbrückenden Spulenwindungen gebildet wird und auf welcher dann der zur Überbrückung dienende Leiterbahnabschnitt aufgebracht wird. Es ist aber auch möglich, dass ein auf der Vorderseite des Trägerbandes verlaufender Leiterbahnabschnitt der die Spule bildenden Leiterbahn diese Überbrückung durchführt und damit die Spule schließt, wenn er wieder auf die Rückseite des Leiterbandes zurückgeführt wird.

Es ist möglich, die Unterbrechung der Spule in dem Chipmodul an einer solchen Stelle vorzusehen, an der der an der Vorderseite des Trägerbandes verlaufende Leiterbahnabschnitt wieder auf die Rückseite des Trägerbandes geführt wird. Dabei werden die den ersten Teil des Schalterelementes bildenden Spulenkontakte auf der Rückseite des Trägerbandes oder an einem seitlichen Rand des Trägerbandes gebildet. Auf diese Weise können sowohl das Problem der Überbrückung von Spulenwindungen zum Erhalten einer geschlossenen Spule als auch das Bilden einer Unterbrechung in der Spule zum Erhalten der Spulenkontakte als erstem Teil des Schalterelementes zugleich und auf einfache Weise gelöst werden.

Es kann gemäß einer weiteren Ausführungsform auch eine zusätzliche Spule im Datenträgerkörper vorgesehen sein, die mit der Spule im Chipmodul induktiv gekoppelt ist. Auf diese Weise lässt sich die Reichweite des elektromagnetischen Feldes erhöhen.

Es ist aber auch möglich, dass die gesamte die Spule bildende Leiterbahn auf der Rückseite des Trägerbandes verläuft und eine Überbrückung von Spulenwindungen zum Erhalten einer geschlossenen Spule nicht auf dem Trägerband selbst, sondern erst in dem Datenträgerkörper bereitgestellt wird. Auf diese Weise kann die Spule auf dem Trägerband besonders einfach und kostengünstig hergestellt werden. Es kann darauf verzichtet werden, zum Überbrücken von Spulenwindungen auf dem Trägerband zumindest einen Leiterbahnabschnitt einer die Spule bildenden Leiterbahn auf der Vorderseite des Trägerbandes verlaufen zu lassen. Dementsprechend können Durchkontaktierungen entfallen. Weiterhin ist es verzichtbar, Spulenwindungen auf der Rückseite des Trägerbandes geeignet zu überbrücken, beispielsweise mittels eines Bonddrahtes oder einer isolierenden Brücke.

Auch gemäß dieser Ausführungsform sind die Spulenkontakte auf der Rückseite des Trägerband des Chipmoduls derart angeordnet, dass, wenn das Chipmodul in dem Datenträgerkörper derart angeordnet ist, dass die Spulenkontakte über einer Kavität des Datenträgerkörpers angeordnet sind, in welcher ein elektrisch leitfähiges Element angeordnet ist, welches einen Anteil des zweiten Teils des Schalterelements bildet, die Spulenkontakte durch Herunterdrücken des Trägerbandes im Bereich der Kavität verbunden werden können.

Abweichend von der ersten Ausführungsform müssen nun die Spulenkontakte auf der Rückseite des Trägerbandes nicht notwendig benachbart zueinander angeordnet sein. Der zweite Teil des Schalterelements in dem Datenträgerkörper enthält gemäß dieser Ausführungsform weiterhin eine Einrichtung zum Überbrücken von auf der Rückseite des Trägerbandes verlaufenden Spulenwindungen, welche zwischen den beiden zu verbindenden Spulenkontakten verlaufen.

Eine solche Einrichtung kann beispielsweise eine elektrisch isolierende Schicht sein, welche im Bereich der zu überbrückenden Spulenwindungen auf dem elektrisch leitfähigen Element angeordnet ist. Alternativ kann das elektrisch leitfähige Element zumindest bereichsweise vollständig innerhalb des elektrisch isolierenden Datenträgerkörpers verlaufen, sodass auch auf diese Weise ein Überbrücken der zwischen den zu verbindenden Spulenkontakten verlaufenden Spulenwindungen seitens des Datenträgerkörpers erfolgen kann, wenn das Chipmodul in der dazu vorgesehen Kavität des Datenträgerkörpers angeordnet wird.

Die Erfindung wird im Folgenden mit Bezug auf die beiliegenden Zeichnungen beispielhaft beschrieben. Darin zeigen:
- Figur 1: einen Ausschnitt einer ersten Ausführungsform eines erfindungsgemäßen Datenträgers in Draufsicht;
- Figur 2: einen Schnitt durch den Datenträger aus Fig. 1 entlang der Schnittlinie A-A;
- Figur 3: einen Ausschnitt einer zweiten Ausführungsform eines erfindungsgemäßen Datenträgers in Draufsicht;
- Figur 4: einen Schnitt durch den Datenträger aus Fig. 3 entlang der Schnittlinie B-B;
- Figur 5: eine Draufsicht auf die Rückseite eines erfindungsgemäßen Chipmoduls gemäß einer dritten Ausführungsform,
- Figur 6: einen Schnitt durch einen Datenträgerkörper zum Aufnehmen des Chipmoduls aus Fig. 5,
- Figur 7: eine Draufsicht auf die Rückseite eines erfindungsgemäßen Chipmoduls gemäß einer vierten Ausführungsform,
- Figur 8: einen Schnitt durch einen Datenträgerkörper zum Aufnehmen des Chipmoduls aus Fig. 7, und
- Figur 9: einen Ausschnitt eines Schnitts durch einen alternativen Datenträgerkörper zum Aufnehmen des Chipmoduls aus Fig. 7.

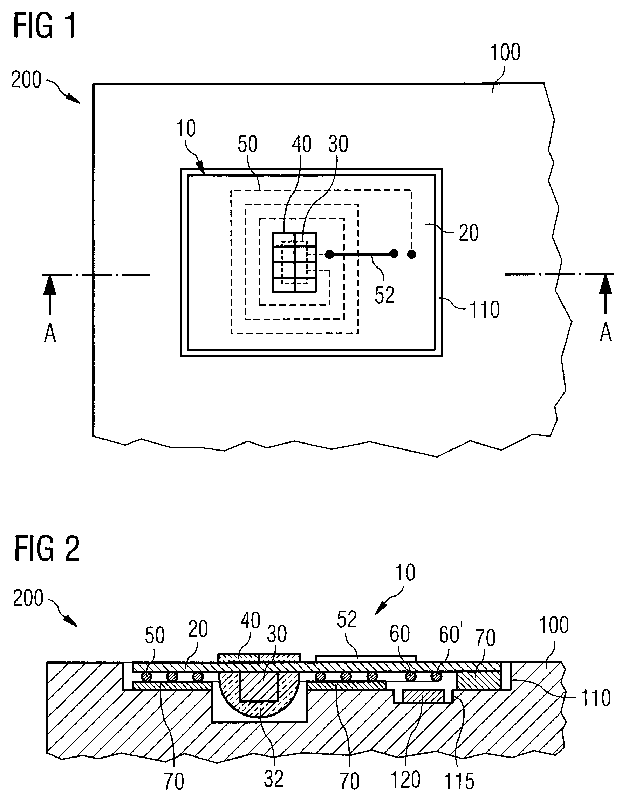

Mit Bezug auf die Fig. 1 und 2 umfasst ein Datenträgerkörper 100 zum Bilden eines Datenträgers 200, beispielsweise einer Chipkarte oder eines sonstigen kartenfömigen Datenträgers, eine Kavität 110 zum Aufnehmen eines Chipmoduls 10. Das Chipmodul 10 ist auf der Vorderseite eines Trägerbandes 20 mit Kontaktflächen 40 ausgestattet. Diese dienen zur kontaktbehafteten Datenkommunikation mit einem Schaltkreis 30 sowie zur Energieversorgung des Schaltkreises 30 im Rahmen einer kontaktbehafteten Datenkommunikation. Die Kontaktflächen 40 sind in bekannter Weise mit dem auf der Rückseite des Trägerbandes 20 angeordneten integrierten Schaltkreis 30 verbunden, beispielsweise mittels (nicht gezeigter) Bond-Drähte. Der Schaltkreis 30 ist zum Schutz vor mechanischen und Umwelteinflüssen mit einer Vergussschicht 32 umgeben. Auf dem Trägerband 20 ist weiterhin eine mit dem Schaltkreis 30 verbundene Spule 50 angeordnet. Diese dient zur kontaktlosen Datenkommunikation mit dem Schaltkreis 30 sowie zur Energieversorgung des Schaltkreises 30 im Kontaktlos-Betrieb.

Die Spule 50 verläuft, ausgehend von dem Schaltkreis 30, um den Schaltkreis 30 herum und fast in ihrer gesamten Länge auf der Rückseite des Trägerbandes 20. Lediglich ein kurzer Leiterbahnabschnitt 52 der die Spule 50 bildenden Leiterbahn verläuft auf der Vorderseite des Trägerbandes 20. Damit werden die auf der Rückseite des Trägerbandes 20 verlaufenden Spulenwindungen überbrückt. An den Stellen, an denen die Leiterbahn von der Rückseite des Trägerbandes 20 auf die Vorderseite derselben wechselt, wird die Leiterbahn durch das Trägerband 20 hindurch geführt (durchkontaktiert), beispielsweise über ein Via.

An der Stelle, an der der auf der Vorderseite verlaufende Leiterbahnabschnitt 52 wieder auf die Rückseite geführt wird, wird die Spule 50 unterbrochen und es bildet sich an diesem Spulenende ein Spulenkontakt 60 auf der Rückseite des Trägerbandes 20. Ein zweiter Spulenkontakt 60' bildet sich am anderen Ende der offenen Spule, d.h. an dem Ende des Leiterbahnabschnitts der die Spule 50 bildenden Leiterbahn, welches vollständig auf der Rückseite des Trägerbandes 20 um den Schaltkreis 30 herum verläuft. Dabei werden die Leiterbahnen so geführt, dass die Spulenkontakte 60 und 60' auf einer seitlichen, flächigen Ausdehnung des Trägerbandes 20 auf deren Rückseite benachbart zueinander angeordnet sind. Die beiden Spulenkontakte 60, 60' bilden einen ersten Teil eines Schalterelements zum temporären Aufheben der Unterbrechung der Spule 50 durch Betätigen des Schalterelements.

Die beschriebene Anordnung der Spulenkontakte 60, 60' auf der Rückseite des Trägerbandes 20 ermöglicht es, wie in Fig. 2 illustriert, auf einfache Weise unter Verwendung eines zweiten Teils 120 des Schalterelements in dem Datenträgerkörper 100 ein effektives und zuverlässiges Schalterelement herzustellen. Der zweite Teil des Schalterelements wird durch ein elektrisch leitfähiges Element 120 bereitgestellt, welches am Boden einer weiteren, in der Kavität 110 gebildeten Kavität 115 angeordnet ist. Wenn nun das Chipmodul 10 in die Kavität 110 eingesetzt und dort mittels eines geeigneten Klebers 70 fixiert wird, geschieht dies derart, dass die Spulenkontakte 60, 60' über der Kavität 115 zu liegen kommen.

In diesem Zustand sind die Spulenkontakte 60, 60' und das elektrisch leitfähige Element 120 durch einen isolierenden Spalt getrennt, die Spule 50 ist daher unterbrochen und es kann keine kontaktlose Datenkommunikation, insbesondere kein unbefugtes Auslesen des Schaltkreises 30, erfolgen.

Wird das Trägerband 20 im Bereich der Kavität 115 heruntergedrückt, so senken sich die Spulenkontakte 60, 60' ab und kontaktieren gleichzeitig das elektrisch leitfähige Element 120. Auf diese Weise wird die Unterbrechung der Spule 50 aufgehoben und es kann eine kontaktlose Datenkommunikation mittels der Spule 50 stattfinden. Wenn ein Nutzer den Datenträger 200 willentlich zur kontaktlosen Datenkommunikation einsetzen will, so muss er lediglich während der durchzuführenden Datenkommunikation das Trägerband 20 im Bereich der Kaviät 115 niederdrücken. Wird kein Druck auf diesen Bereich ausgeübt, z.B. wenn der Datenträger 200 nicht im Gebrauch ist, ist die Spule 50 automatisch unterbrochen und ein Angriff auf den Datenträger 200 zum unbefugten Auslesen des Schaltkreises 30 kann keinen Erfolg haben.

Anstelle des elektrisch leitfähigen Elements 120 an dren Boden kann die Kavität 115 auch im Wesentlichen vollständig mit einem elasto-resistiven Material gefüllt sein. Die Spulenkontakte 60, 60' sind dann stets mit diesem Material verbunden. Das Material hat die Eigenschaft, dass es durch Druckeinwirkung seinen elektrischen Widerstand erheblich verringert. Wird kein Druck auf das Trägerband 20 im Bereich der Kavität 115 ausgeübt, dieser also nicht heruntergedrückt, wirkt das Material isolierend, d.h. die Spule 50 ist - elektrisch - unterbrochen. Erst wenn das Trägerband 20 in dem Bereich heruntergedrückt wird, verringert sich der Widerstand des Materials durch den Druck auf dasselbe, es wird in benötigter Weise elektrisch leitfähig und die Unterbrechung der Spule 50 wird für Die Dauer der Druckausübung temporär aufgehoben. Damit ist eine kontaktlose Datenkommunikation mittels der Spule 50 möglich.

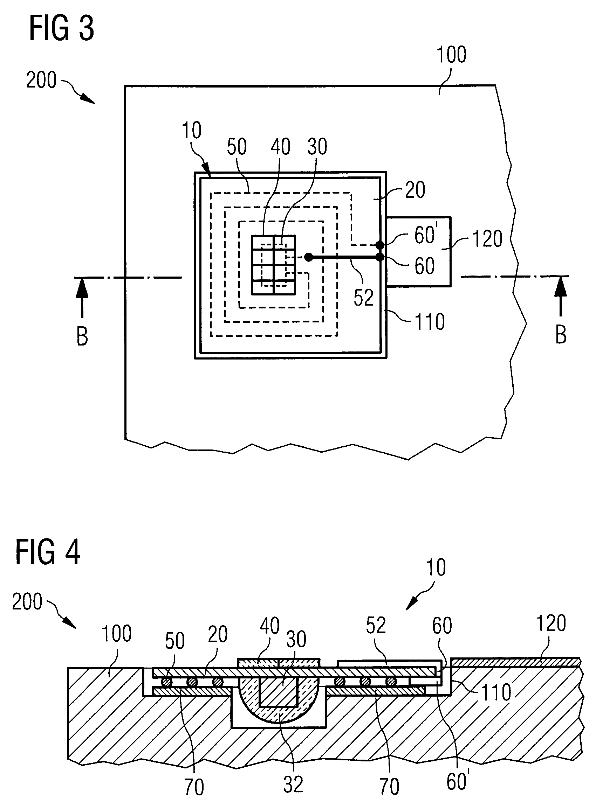

Die in den Fig. 3 und 4 dargestellte Ausführungsform eines Datenträgers 200 unterscheidet sich von der in den Fig. 1 und 2 gezeigten einmal darin, dass die Spulenkontakte 60, 60', welche die Enden der die Spule 50 bildenden Leiterbahn an der Unterbrechung der Spule 50 bilden, nicht auf der Rückseite des Trägerbandes 20, sondern an einem seitlichen Rand des Trägerbandes 20 angeordnet sind. Dazu wird der an der Vorderseite des Trägerbandes 20 verlaufende Leiterbahnabschnitt 52 beispielsweise über den Rand des Trägerbandes 20 gebogen, um dort den ersten Spulenkontakt 60 zu bilden. In ähnlicher Weise kann der entsprechende auf der Rückseite des Trägerbandes 20 verlaufende Leiterbahnabschnitt an dem Rand des Trägerbandes 20 nach oben umgebogen werden, so dass sich benachbart zu dem ersten Spulenkontakt 60 ein zweiter Spulenkontakt 60' bildet. Es ist auch möglich, die am Rand des Trägerbandes 20 liegenden Spulenkontakte 60, 60' auf andere Weise zu erhalten, beispielsweise dadurch, dass bei einem geeigneten Ausstanzen des Trägerbandes 20 vertikale Leiterbahnstrukturen (Vias) teilweise freigelegt werden.

Im weiteren Unterschied zu der Ausführungsform nach Fig. 1 und 2 ist in der vorliegenden Ausführungsform gemäß den Fig. 3 und 4 der zweite Teil 120 des Schalterelements des Datenträgerkörpers 100, welcher mit dem im Chipmoduls 10 gebildeten ersten Teil des Schalterelements zusammenwirkt, nicht am Boden einer Kavität des Datenträgerkörpers 100, sondern an einem seitlichen Rand der Kavität 110 angeordnet, benachbart zu den am Rand des Trägerbandes 20 angeordneten Spulenkontakten 60, 60' des in die Kavität 110 eingesetzten Chipmoduls 10. Das elektrisch leitfähige Element 120 kann beispielsweise in einer Oberflächenbeschichtung des Datenträgerkörpers 100 bestehen, welche sich zumindest teilweise auf den seitlichen Rand der Kavität 110 erstreckt. Die Beschichtung kann lediglich lokal vorliegen, wie in Fig. 3 angedeutet, oder sich über den gesamten Datenträgerkörper erstrecken.

Das Schalterelement wird in der vorliegenden Ausführungsform dadurch betätigt, dass der Datenträgerkörper 100 verbogen wird. Dazu kann dieser beispielsweise auf eine schalenförmige, konkave Unterlage gelegt werden, wobei von oben auf den Datenträgerkörper 100 gedrückt wird, so dass sich dieser im mittleren Bereich nach unten durchbiegt. Dadurch verschwindet der Spalt zwischen den Spulenkontakten 60,60' einerseits und dem am Rand des Kavität 110 angeordneten elektrisch leitfähigen Elements 120 andererseits. Die Spulenkontakte 60, 60' werden über das Element 120 miteinander elekrisch leitend verbunden und die Unterbrechung der Spule 50 wird für die Dauer der Verbiegung des Datenträgerkörpers 100 aufgehoben. In diesem Zustand kann eine kontaktlose Datenkommunikation mit dem Schaltkreis 30 über die Spule 50 erfolgen. Im nicht verbogenen Zustand ist die Spule 50 auf dem Chipmodul 10 unterbrochen, folglich kann der Schaltkreis 30 nicht unbefugt ausgelesen werden.

Wie mit Bezug auf die Ausführungsform gemäß den Fig. 1 und 2 beschrieben, kann auch gemäß der Ausführungsform der Fig. 3 und 4 als elektrisch leitfähiges Material 120 ein elasto-resistives Material zum Einsatz kommen. Dieses füllt dann vorzugsweise zumindest den Spalt zwischen dem seitlichen Rand des Trägerbandes 20, an dem die Spulenkontakte 60, 60' angeordnet sind, und dem benachbarten seitlichen Rand der Kavität 110 des Datenträgerkörpers 100 aus. Dadurch kann neben einer zuverlässigen Wirkungsweise, wie vorstehend beschrieben, zusätzlich sichergestellt werden, dass das Schalterelement nicht durch versehentlich in den Spalt gelangten Schmutz oder dergleichen beinträchtigt wird.

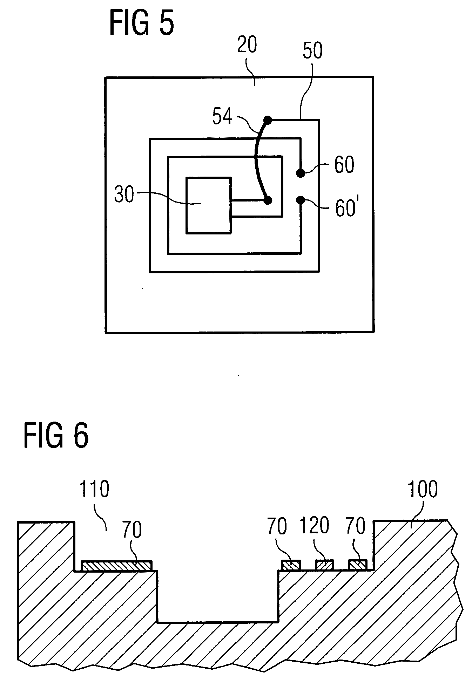

In Fig. 5 ist eine dritte Ausführungsform eines Chipmoduls 10 schematisch in einer Draufsicht auf die Rückseite des entsprechenden Trägerbandes 20 dargestellt. Gemäß dieser Ausführungsform verläuft die gesamte Spule 50 auf der Rückseite des Trägerbandes 20. Kein Anteil der die Spule bildenden Leiterbahn wird auf die Vorderseite des Trägerbandes 20 geführt. Um eine geschlossene Spule zu erhalten (die "künstliche" Unterbrechung der Spule 50 zwischen den Spulenkontakten 60,60' sei hier für den Moment nicht beachtet), wird ein Ende der die Spule 50 bildenden Leiterbahnstruktur, welches ummittelbar am Schaltkreis 30 endet, mittels eines Bond-Drahtes 54 mit dem anderen Ende der Leiterbahnstruktur am Ende der äußersten Spulewindung verbunden. Mittels des Bond-Drahtes 54 werden die dazwischen liegenden Spulenwindungen in nicht kontaktierender Weise überbrückt. Die Spule 50 kann von den beiden Teilen des Schalterelements geeignet isoliert werden, beispielsweise mittels Isolierlack oder dergleichen.

Das Schalterelement zum temporären Aufheben der Unterbrechung der Spule 50 wird hier genauso gebildet, wie dies mit Bezug auf die Fig. 1 und 2 beschrieben worden ist. Dazu wird das Chipmodul 10 aus Fig. 5 in die Kavität 110 des in Fig. 6 gezeigten Datenträgerkörpers 100 eingesetzt und dort mittels des Klebers 70 fixiert. Die Anordnung ist derart, dass die Spulenkontakte 60, 60' auf dem elektrisch leitfähigen Element 120, welches hier aus einem elasto-resistiven Material gebildet ist, zu liegen kommen. Gemäß der vorliegenden Ausführungsform kann im Vergleich zu der Ausführungsform in den Fig. 1 und 2 Trägerbandmaterial eingespart werden, da das Trägerband 20 zum Bilden der Spulenkontakte 60, 60' keine seitliche Ausdehnung aufweisen muss. Weiterhin kann aufgrund der Verwendung des elasto-resistiven Materials auf eine zweite Kavität 115 in der Kavität 110 verzichtet werden.

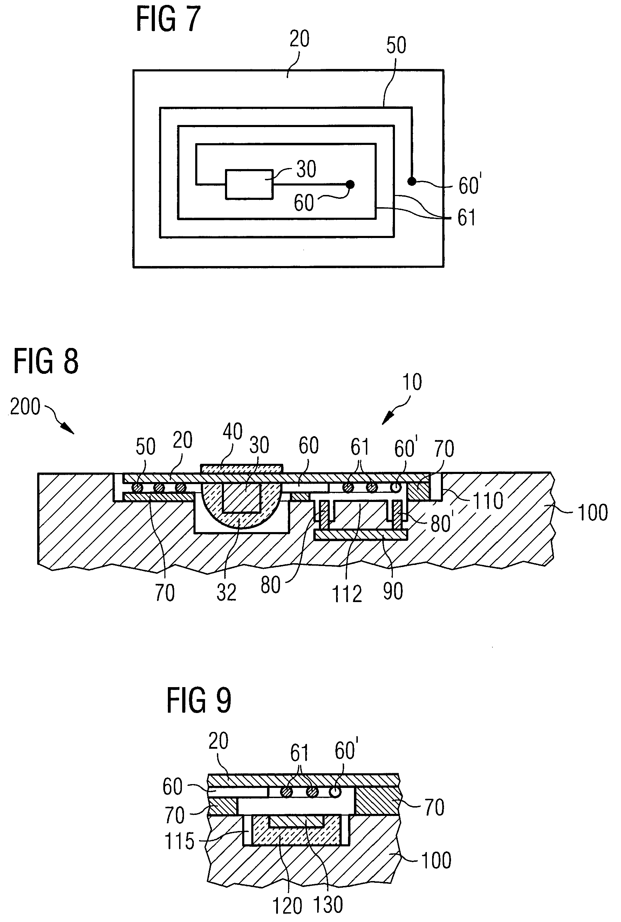

In Fig. 7 ist eine vierte Ausführungsform eines Chipmoduls 10 schematisch in einer Draufsicht auf die Rückseite des entsprechenden Trägerbandes 20 dargestellt. Gemäß dieser Ausführungsform verläuft die gesamte Spule 50 auf der Rückseite des Trägerbandes 20. Kein Anteil der die Spule bildenden Leiterbahn wird auf die Vorderseite des Trägerbandes 20 geführt. Im Gegensatz zu der Ausführungsform aus Fig. 5 umfasst diese Ausführungsform keine Überbrückung zum Überbrücken der zwischen den Spulenkontakten 60, 60' verlaufenden Spulenwindungen 61 der Spule 50. Wie mit Bezug auf die Fig. 8 und 9 illustriert, stellt gemäß dieser Ausführungsform der Datenträgerkörper 100 die entsprechenden Mittel zum Überbrücken dieser Spulenwindungen 61 bereit. Dadurch wird, wie beschrieben, ermöglicht, dass die Spule 50 temporär geschlossen wird, um eine kontaktlose Datenkommunikation zu ermöglichen.

Das zweite Schalterelement ist in dem Datenträgerkörper 100 gemäß Fig. 8 teilweise durch eine elektrisch leitfähige Schicht 90 gebildet, welche in dem elektrisch isolierenden Datenträgerkörper 100 verläuft. Lediglich an den Stellen, oberhalb derer die Spulenkontakte 60, 60' des Chipmoduls 10 zu liegen kommen, wenn dieses in der Kavität 110 des Datenträgerkörpers 100 angeordnet wird, ist die Schicht 90 freigelegt. Entsprechend entstehende Kanäle sind mit elektrisch leitfähigem Material gefüllt, wodurch sich elektrisch leitfähige Elemente 80, 80' bilden, welche jeweils direkt mit der elektrisch leitfähigen Schicht 90 verbunden sind. Der zweite Teil des Schalterelements besteht somit aus den Elementen 80, 80' in Kombination mit der elektrisch leitfähigen Schicht 90. Ein Betätigen des Schalterelements erfolgt analog zu der ersten Ausführungsform. Wird das Trägerband 20 im Bereich der Schicht 90 heruntergedrückt, so senken sich die Spulenkontakte 60, 60' ab und kontaktieren gleichzeitig jeweils die Elemente 80, 80' des zweiten Teils des Schalterelements, wodurch eine geschlossene Antennenspule 50 gebildet wird. Die zwischen den Spulenkontakten 60, 60' verlaufenden Spulenwindungen 61 werden durch den Bereich 112 des Datenträgerkörpers 100 überbrückt, unterhalb dessen die elektrisch leitfähige Schicht 90 verläuft.

Eine alternative Ausführungsform eines analogen zweiten Teils des Schalterelements ist in Fig. 9 gezeigt. Hier ist, ähnlich zu der ersten Ausführungsform gemäß Fig. 2, der zweite Teil des Schalterelements durch ein elektrisch leitfähiges Element 120 bereitgestellt, welches am Boden einer weiteren, in der Kavität 110 gebildeten Kavität 115 angeordnet ist. Im Unterschied zu der Ausführungsform in Fig. 2 ist auf dem elektrisch leitfähigen Element 120 zusätzlich eine elektrisch isolierende Schicht 130 angeordnet. Diese Schicht 130 liegt in dem Bereich vor, in welchem, wenn das Chipmodul 10 aus Fig. 7 in der Kavität 110 des Datenträgerkörpers 100 aus Fig. 9 angeordnet wird, die Spulenwindungen 61, welche auf dem Trägerband 20 zwischen den Spulenkontakte 60, 60' verlaufen, zu liegen kommen.

Wird das Trägerband 20 im Bereich der Kavität 115 heruntergedrückt, so senken sich die Spulenkontakte 60, 60' ab und kontaktieren gleichzeitig das elektrisch leitfähige Element 120. Auf diese Weise wird die Unterbrechung der Spule 50 aufgehoben und es kann eine kontaktlose Datenkommunikation mittels der Spule 50 stattfinden. Gleichzeitig werden die zwischen den Spulenkontakten 60, 60' verlaufenden Spulenwindungen 61 durch die elektrisch isolierende Schicht 130 überbrückt, so dass Kurzschlüsse zwischen einzelnen Spulenwindungen der Spule 50 durch das elektrisch leitfähige Element 120 auf einfache Weise vermieden werden können.

## Patentansprüche

1. Chipmodul (10) zur Anordnung in einem Datenträgerkörper (100), umfassend ein Trägerband (20), einen auf dem Trägerband (20) angeordneten integrierten Schaltkreis (30), mit dem integrierten Schaltkreis (30) verbundene Kontaktflächen (40) zur kontaktbehafteten Datenkommunikation sowie eine auf dem Trägerband (20) angeordnete und mit dem integrierten Schaltkreis (20) verbundene Spule (50) zur kontaktlosen Datenkommunikation, **dadurch gekennzeichnet, dass** die Spule (50) an einer Unterbrechung der Spule Spulenkontakte (60, 60') ausbildet, welche auf dem Trägerband (20) einen ersten Teil eines Schalterelements (60, 60',120) bilden, mittels dessen die Spulenkontakte (60,60') verbindbar sind, wenn das Chipmodul (10) in dem Datenträgerkörper (100) angeordnet ist.

2. Chipmodul (10) nach Anspruch 1, **dadurch gekennzeichnet, dass** die Spulenkontakte (60, 60') derart auf dem Trägerband (20) angeordnet sind, dass sie mit einem in dem Datenträgerkörper (100) ausgebildeten zweiten Teil (120) des Schalterelements (60, 60', 120) zusammenwirken, wenn das Chipmodul (10) in dem Datenträgerkörper (100) angeordnet ist.

3. Chipmodul (10) nach Anspruch 2, **dadurch gekennzeichnet, dass** die Spulenkontakte (60, 60') auf der Rückseite des Trägerbandes (20) benachbart zueinander angeordnet sind.

4. Chipmodul nach Anspruch 3, **dadurch gekennzeichnet, dass** das Trägerband (20) eine seitliche Ausdehnung aufweist, auf deren Rückseite die Spulenkontakte (60, 60') angeordnet sind.

5. Chipmodul (10) nach einem der Ansprüche 3 oder 4, **dadurch gekennzeichnet, dass** die Spulenkontakte (60, 60') auf der Rückseite des Trägerbandes (20) derart angeordnet sind, dass, wenn das Chipmodul (10) in dem Datenträgerkörper (100) derart angeordnet ist, dass die Spulenkontakte (60, 60') über einer Kavität (115) des Datenträgerkörpers (100) angeordnet sind, in welcher ein den zweiten Teil des Schalterelements bildendes elektrisch leitfähiges Element (120) angeordnet ist, die Spulenkontakte (60, 60') durch Herunterdrücken des Trägerbandes (20) im Bereich der Kavität (115) verbindbar sind.

6. Chipmodul (10) nach Anspruch 2, **dadurch gekennzeichnet, dass** die Spulenkontakte (60, 60') an einem seitlichen Rand des Trägerbandes (20) benachbart zueinander angeordnet sind.

7. Chipmodul (10) nach Anspruch 6, **dadurch gekennzeichnet, dass** die Spulenkontakte (60, 60') an dem seitlichen Rand des Trägerbandes (20) derart angeordnet sind, dass, wenn das Chipmodul (10) in einer Kavität (110) des Datenträgerkörpers (100), an deren seitlichem Rand ein den zweiten Teil des Schalterelements bildendes elektrisch leitfähiges Element (120) angeordnet ist, derart angeordnet ist, dass die Spulenkontakte (60, 60') benachbart zu dem elektrisch leitfähigen Element (120) angeordnet sind, die Spulenkontakte (60, 60') durch Verbiegen des Datenträgerkörpers (100) verbindbar sind.

8. Chipmodul (10) nach einem der Ansprüche 1 bis 7, **dadurch gekennzeichnet dass** zumindest ein Leiterbahnabschnitt (52) einer die Spule (50) bildenden Leiterbahnstruktur auf der Vorderseite des Trägerbandes (20) verläuft.

9. Chipmodul (10) nach Anspruch 8, **dadurch gekennzeichnet, dass** der integrierte Schaltkreis (30) auf der Rückseite des Trägerbandes (20) angeordnet ist und die Spule (50) um den Schaltkreis (30) geführt ist, wobei der auf der Vorderseite des Trägerbandes (20) verlaufende Leiterbahnabschnitt (52) durch Überbrückung von Spulenabschnitten auf der Rückseite des Trägerbandes (20) eine geschlossene Spule (50) bildet.

10. Chipmodul (10) nach einem der Ansprüche 8 oder 9, **dadurch gekennzeichnet, dass** sich die Unterbrechung der Spule (50) an einer Stelle befindet, an der der auf der Vorderseite des Trägerbandes (20) verlaufende Leiterbahnabschnitt (52) wieder auf die Rückseite des Trägerbandes (20) geführt wird, wobei die den ersten Teil des Schalterelements (60, 60',120) bildenden Spulenkontakte (60, 60') auf der Rückseite des Trägerbandes (20) oder an einem seitlichen Rand des Trägerbandes (20) gebildet sind.

11. Datenträgerkörper (100) zum Bilden eines portablen Datenträgers (200) durch Aufnehmen eines Chipmoduls (10) nach einem der Ansprüche 1 bis 10, **dadurch gekennzeichnet, dass** der Datenträgerkörper (100) ein den zweiten Teil des Schalterelements (60, 60',120) bildendes elektrisch leitfähiges Element (120) umfasst, welches derart in dem Datenträgerkörper (100) angeordnet ist, dass es, wenn das Chipmodul (10) in dem Datenträgerkörper (10) angeordnet ist, mit dem ersten Teil des Schalterelements (60, 60', 120) derart zusammenwirkt, dass die Spulenkontakte (60, 60') der Spule (50) durch das elektrisch leitfähige Element (120) verbindbar sind.

12. Datenträgerkörper (100) nach Anspruch 11, **gekennzeichnet durch** zumindest eine Kavität (115), in welcher das elektrisch leitfähige Element (120) derart angeordnet ist, dass, wenn ein Chipmodul (10), dessen Spulenkontakte (60, 60') auf der Rückseite des Trägerbandes (20) benachbart zueinander angeordnet sind, derart in dem Datenträgerkörper (100) angeordnet ist, dass die Spulenkontakte (60, 60') über der Kavität (115) angeordnet sind, die Spulenkontakte (60, 60') **durch** Herunterdrücken des Trägerbandes (20) im Bereich der Kavität (115) verbindbar sind.

13. Datenträgerkörper (100) nach Anspruch 11, **gekennzeichnet durch** zumindest eine Kavität (110), in welcher das elektrisch leitfähige Element (120) zumindest teilweise an einem seitlichen Rand derart angeordnet ist, dass, wenn ein Chipmodul (10), dessen Spulenkontakte (60, 60') an einem seitlichen Rand des Trägerbandes (20) benachbart zueinander angeordnet sind, derart in dem Datenträgerkörper (100) angeordnet ist, dass die Spulenkontakte (60, 60') benachbart zu dem elektrisch leitfähigen Element (120) angeordnet sind, die Spulenkontakte (60, 60') **durch** Verbiegen des Datenträgerkörpers (100) verbindbar sind.

14. Datenträgerkörper (100) nach einem der Ansprüche 11 bis 13, **dadurch gekennzeichnet, dass** das elektrisch leitfähige Element (120) aus einem Material gebildet ist, welches unter Druck seinen elektrischen Widerstand verringert.

15. Datenträgerkörper (100) nach einem der Ansprüche 11 bis 14, **dadurch gekennzeichnet, dass** eine zweite Spule in dem Datenträgerkörper aufgenommen ist, die mit der Spule (50) des Chipmoduls (10) zusammenwirkt.

16. Portabler Datenträger (200), umfassend einen Datenträgerkörper (100) nach einem der Ansprüche 11 bis 15 und ein darin angeordnetes Chipmodul (10) nach einem der Ansprüche 1 bis 10.

## Claims

1. A chip module (10) for arrangement in a data carrier body (100), comprising a carrier band (20), an integrated circuit (30) arranged on the carrier band (20), contact surfaces (40) connected to the integrated circuit (30) for contact-type data communication, as well as a coil (50) arranged on the on the carrier band (20) and connected to the integrated circuit (20) for contactless data communication, **characterized in that** the coil (50) at an interruption of the coil forms coil contacts (60, 60') forming a first part of a switch element (60, 60', 120) on the carrier band (20), by means of which switch element the coil contacts (60 60') are connectible when the chip module (10) is arranged in the data carrier body (100).

2. The chip module (10) according to claim 1, **characterized in that** the coil contacts (60, 60') are arranged on the carrier band (20) such that they interact with a second part (120) of the switch element (60, 60', 120) formed in the data carrier body (100) when the chip module (10) is arranged in the data carrier body (100).

3. The chip module (10) according to claim 2, **characterized in that** the coil contacts (60, 60') on the back side of the carrier band (20) are arranged adjacent to each other.

4. The chip module according to claim 3, **characterized in that** the carrier band (20) has a lateral extension on the back side of which there are arranged the coil contacts (60, 60').

5. The chip module (10) according to any of the claims 3 or 4, **characterized in that** the coil contacts (60, 60') on the back side of the carrier band (20) are arranged such that, when the chip module (10) is arranged in the data carrier body (100) such that the coil contacts (60, 60') are arranged above a cavity (115) of the data carrier body (100), in which cavity an electroconductive element (120) forming the second part of the switch element is arranged, the coil contacts (60, 60') are connectible by pressing down the carrier band (20) in the region of the cavity (115).

6. The chip module (10) according to claim 2, **characterized in that** the coil contacts (60, 60') on a lateral edge of the carrier band (20) are arranged adjacent to each other.

7. The chip module (10) according to claim 6, **characterized in that** the coil contacts (60, 60') on the lateral edge of the carrier band (20) are arranged such that, when the chip module (10) is so arranged in a cavity (110) of the data carrier body (100), on the lateral edge of which there is arranged an electroconductive element (120) forming the second part of the switch element, that the coil contacts (60, 60') are arranged adjacent to the electroconductive element (120), the coil contacts (60, 60') are connectible by bending the data carrier body (100).

8. The chip module (10) according to any of the claims 1 to 7, **characterized in that** at least one conductive path section (52) of a conductive path structure forming the coil (50) extends on the front side of the carrier band (20).

9. The chip module (10) according to claim 8, **characterized in that** the integrated circuit (30) is arranged on the back side of the carrier band (20) and the coil (50) is guided around the circuit (30), wherein the conductive path section (52) extending on the front side of the carrier band (20) forms a closed coil (50) by bridging coil sections on the back side of the carrier band (20).

10. The chip module (10) according to any of the claims 8 or 9, **characterized in that** the interruption of the coil (50) is disposed in a place in which the conductive path section (52) extending on the front side of the carrier band (20) is guided back to the back side of the carrier band (20), wherein the coil contacts (60, 60') forming the first part of the switch element (60, 60', 120) are formed on the back side of the carrier band (20) or on a lateral edge of the carrier band (20).

11. A data carrier body (100) for forming a portable data carrier (200) by receiving a chip module (10) according to any of the claims 1 to 10, **characterized in that** the data carrier body (100) comprises an electroconductive element (120) forming the second part of the switch element (60, 60', 120), said electroconductive element being so arranged in the data carrier body (100) that, when the chip module (10) is arranged in the data carrier body (100), said electroconductive element interacts with the first part of the switch element (60, 60', 120) such that the coil contacts (60, 60') of the coil (50) are connectible by the electroconductive element (120).

12. The data carrier body (100) according to claim 11, **characterized by** at least one cavity (115) in which the electroconductive element (120) is arranged such that, when a chip module (10), the coil contacts (60, 60') of which are arranged adjacent to each other on the back side of the carrier band (20), is so arranged in the data carrier body (100) that the coil contacts (60, 60') are arranged above the cavity (115), said coil contacts (60, 60') are connectible by pressing down the carrier band (20) in the region of the cavity (115).

13. The data carrier body (100) according to claim 11, **characterized by** at least one cavity (110) in which the electroconductive element (120) is arranged at least partially on a lateral edge such that, when a chip module (10), the coil contacts (60, 60') of which are arranged adjacent to each other on a lateral edge of the carrier band (20), is so arranged in the carrier body (100) that the coil contacts (60, 60') are arranged adjacent to the electroconductive element (120), said coil contacts (60, 60') are connectible by bending the data carrier body (100).

14. The data carrier body (100) according to any of the claims 11 to 13, **characterized in that** the electroconductive element (120) is formed of a material which reduces its electrical resistance under pressure.

15. The data carrier body (100) according to any of the claims 11 to 14, **characterized in that** in the data carrier body a second coil is received which interacts with the coil (50) of the chip module (10).

16. A portable data carrier (200) comprising a data carrier body (100) according to any of the claims 11 to 15 and a chip module (10) according to any of the claims 1 to 10 arranged therein.

## Revendications

1. Module puce (10) destiné à être agencé dans un corps de support de données (100), comprenant une bande support (20), un circuit (30) intégré agencé sur la bande support (20), des surfaces de contact (40) reliées au circuit (30) intégré pour la communication de données avec contact, ainsi qu'une bobine (50) agencée sur la bande support (20) et reliée au circuit (20) intégré pour la communication de données sans contact, **caractérisé en ce que** la bobine (50) forme, à une interruption de la bobine, des contacts de bobine (60, 60') qui constituent sur la bande support (20) une première partie d'un élément de commutation (60, 60', 120) au moyen duquel les contacts de bobine (60, 60') peuvent être reliés quand le module puce (10) est agencé dans le corps de support de données (100).

2. Module puce (10) selon la revendication 1, **caractérisé en ce que** les contacts de bobine (60, 60') sont agencés de telle façon sur la bande support (20) qu'ils co-agissent avec une deuxième partie (120) de l'élément de commutation (60, 60', 120) réalisée dans le corps de support de données (100) quand le module puce (10) est agencé dans le corps de support de données (100).

3. Module puce (10) selon la revendication 2, **caractérisé en ce que** les contacts de bobine (60, 60') sont agencés sur la face arrière de la bande support (20) de manière adjacente entre eux.

4. Module puce selon la revendication 3, **caractérisé en ce que** la bande support (20) comporte une extension latérale sur la face arrière de laquelle les contacts de bobine (60, 60') sont agencés.

5. Module puce (10) selon une des revendications 3 ou 4, **caractérisé en ce que** les contacts de bobine (60, 60') sont agencés de telle façon sur la face arrière de la bande support (20) que, quand le module puce (10) est agencé dans le corps de support de données (100) de telle façon que les contacts de bobine (60, 60') sont agencés au-dessus d'une cavité (115) du corps de support de données (100) dans laquelle un élément (120) électriquement conducteur constituant la deuxième partie de l'élément de commutation est agencé, les contacts de bobine (60, 60') peuvent être reliés par pression sur la bande support (20) dans la zone de la cavité (115).

6. Module puce (10) selon la revendication 2, **caractérisé en ce que** les contacts de bobine (60, 60') sont agencés à un bord latéral de la bande support (20) de manière adjacente entre eux .

7. Module puce (10) selon la revendication 6, **caractérisé en ce que** les contacts de bobine (60, 60') sont agencés au bord latéral de la bande support (20) de telle façon que, quand le module puce (10) est agencé de telle façon, dans une cavité (110) du corps de support de données (100) au bord latéral de laquelle un élément (120) électriquement conducteur constituant la deuxième partie de l'élément de commutation est agencé, que les contacts de bobine (60, 60') sont agencés de manière adjacente à l'élément (120) électriquement conducteur, les contacts de bobine (60, 60') peuvent être reliés par torsion du corps de support de données (100).

8. Module puce (10) selon une des revendications de 1 à 7, **caractérisé en ce qu'**au moins un tronçon de piste conductrice (52) d'une structure de piste conductrice constituant la bobine (50) s'étend sur la face avant de la bande support (20).

9. Module puce (10) selon la revendication 8, **caractérisé en ce que** le circuit intégré (30) est agencé sur la face arrière de la bande support (20) et **en ce que** la bobine (50) est conduite autour du circuit intégré (30), cependant que le tronçon de piste conductrice (52) s'étendant sur la face avant de la bande support (20) constitue, par pontage de tronçons de bobine sur la face arrière de la bande support (20), une bobine fermée (50).

10. Module puce (10) selon une des revendications 8 ou 9, **caractérisé en ce que** l'interruption de la bobine (50) se trouve à un endroit auquel le tronçon de piste conductrice (52) s'étendant sur la face avant de la bande support (20) est à nouveau conduit sur la face arrière de la bande support (20), cependant que les contacts de bobine (60, 60') qui constituent la première partie de l'élément de commutation (60, 60', 120) sont constitués sur la face arrière de la bande support (20) ou à un bord latéral de la bande support (20).

11. Corps de support de données (100) destiné à la constitution d'un support de données (200) portable par logement d'un module puce (10) selon une des revendications de 1 à 10, **caractérisé en ce que** le corps de support de données (100) comprend un élément (120) électriquement conducteur qui constitue la deuxième partie de l'élément de commutation (60, 60', 120) et qui est agencé de telle façon dans le corps de support de données (100) que, quand le module puce (10) est agencé dans le corps de support de données (10), il co-agit de telle façon avec la première partie de l'élément de commutation (60, 60', 120) que les contacts de bobine (60, 60') de la bobine (50) peuvent être reliés par l'élément (120) électriquement conducteur.

12. Corps de support de données (100) selon la revendication 11, **caractérisé par** au moins une cavité (115) dans laquelle l'élément (120) électriquement conducteur est agencé de telle façon que, quand un module puce (10) dont les contacts de bobine (60, 60') sont agencés sur la face arrière de la bande support (20) de manière adjacente entre eux est agencé de telle façon dans le corps de support de données (100) que les contacts de bobine (60, 60') sont agencés au-dessus de la cavité (115), les contacts de bobine (60, 60') peuvent être reliés par pression sur la bande support (20) dans la zone de la cavité (115).

13. Corps de support de données (100) selon la revendication 11, **caractérisé par** au moins une cavité (110) dans laquelle l'élément (120) électriquement conducteur est agencé de telle façon au moins partiellement à un bord latéral que, quand un module puce (10) dont les contacts de bobine (60, 60') sont agencés à un bord latéral de la bande support (20) de manière adjacente entre eux est agencé de telle façon dans le corps de support de données (100) que les contacts de bobine (60, 60') sont agencés de manière adjacente à l'élément (120) électriquement conducteur, les contacts de bobine (60, 60') peuvent être reliés par torsion du corps de support de données (100).

14. Corps de support de données (100) selon une des revendications de 11 à 13, **caractérisé en ce que** l'élément (120) électriquement conducteur est constitué par un matériau qui, sous pression, a une résistance électrique réduite.

15. Corps de support de données (100) selon une des revendications de 11 à 14, **caractérisé en ce qu'**une deuxième bobine co-agissant avec la bobine (50) du module puce (10) est logée dans le corps de support de données .

16. Support de données (200) portable comprenant un corps de support de données (100) selon une des revendications de 11 à 15 et un module puce (10) selon une des revendications de 1 à 10 y étant agencé.
